Europäisches Patentamt

European Patent Office

Office européen des brevets

(11) Publication number: **0 306 103**
**A1**

(12) # EUROPEAN PATENT APPLICATION

(21) Application number: **88201858.3**

(22) Date of filing: **31.08.88**

(51) Int. Cl.⁴: **C08L 51/04 , C08L 55/02**

(30) Priority: **01.09.87 NL 8702049**

(43) Date of publication of application:
**08.03.89 Bulletin 89/10**

(84) Designated Contracting States:
**AT BE CH DE ES FR GB GR IT LI NL SE**

(71) Applicant: **STAMICARBON B.V.**
**Mijnweg 1**
**NL-6167 AC Geleen(NL)**

(72) Inventor: **Frencken, Eduard Jozef**
**van Oldenbarneveldstraat 22**
**NL-6181 BD Stein (L.)(NL)**
Inventor: **Klumperman, Lubertus**
**Burg. Smeetsstraat 17,**
**NL-6151 GM Sittard(NL)**
Inventor: **Duyzings, Wilhelmus Gerardus**
**Muntstraat 8**
**NL-6121 JL Born(NL)**

(54) **Thermoplastic polymer mixture with a low surface gloss and process for the preparation thereof.**

(57) The invention relates to a thermoplastic polymer composition for the preparation of an object with a low surface gloss based on ABS. To this end ABS is mixed with a powder resin, in which process the powder resin is incorporated in the matrix of the ABS in the form of separate particles.

EP 0 306 103 A1

## THERMOPLASTIC POLYMER MIXTURE WITH A LOW SURFACE GLOSS AND PROCESS FOR THE PREPARATION THEREOF

The invention relates to a thermoplastic polymer mixture for the preparation of an object with a low surface gloss based on a graft copolymer of a vinylaromatic compound on a rubber and optionally a copolymer based on a vinylaromatic compound, and to a process for the preparation thereof.

Such polymer mixtures have been known under the name of ABS (acrylonitrile-butadiene-styrene). One of the characteristic properties of ABS plastics, beside their good impact resistance, is their fine glossy surface. However, for a number of applications of ABS plastics it is desirable for the articles obtained to have an even mat surface.

Examples of such applications are housings of electrical equipment, suitcases and car parts, such as dashboards.

From EP-A-94135 an ABS plastic with a low surface gloss is known, as well as a process for the preparation thereof. The ABS is obtained by mixing a latex of a graft copolymer of acrylonitrile and styrene on butadiene rubber with a latex of a second rubber, upon which the resulting mixture is coagulated, and is processed as usual.

For this preparation process, however, extra process steps are needed, and it is therefore expensive.

An object of the invention is to provide a thermoplastic polymer mixture with a low surface gloss that does not have said disadvantage.

The thermoplastic polymer mixture according to the invention is characterized in that in the matrix of the thermoplastic polymer mixture separate particles of a coating powder are present.

The process for preparing the thermoplastic polymer mixture is characterized in that 95-70 parts by weight of the graft copolymer, and optionally the copolymer, is mixed with 5-30 parts by weight of a curing material that cures so rapidly beyond the melting or processing temperature that the cured material is present in the matrix of the thermoplastic polymer mixture in the form of separate particles.

Surprisingly it has been found that a thermoplastic moulding compound obtained from the thermoplastic polymer mixture not only has a very low surface gloss, but that this low surface gloss is retained also after colouring, and that no blisters are formed on the surface.

It should be pointed out that the mixing of ABS and a curing material (powder resin) is known per se from DE-A-2459973. It is important, according to that patent specification, that immediately after the mixing a mixture of ABS and powder resin should be subjected to a thermal after-treatment at a special heating rate. Owing to the thermal after-treatment, the particles to be cured will diffuse to the surface of the thermoplastic material, so that the surface of the thermoplastic material will be covered completely with coating powder. As a result, surface properties such as, for instance, adhesive power, mouldability and hardness will be improved.

It has now been found that, when the cured powder resin is kept in the ABS matrix in the form of separate particles, so that no growth of particles can take place, a moulding compound is obtained having a low surface gloss.

The curing time depends on the powder resin selected and must be so chosen, in combination with the flow time, that the powder resin will cure immediately during the melting, in the compoundering, so that a separate particle of coating powder is incorporated in the ABS matrix and the combination of particles is impeded as much as possible.

The powder resin to be added contains reactive components that cure easily and rapidly at the melting or processing temperature of the thermoplastic polymer mixture.

The powder resin is mixed in its solid form, with a particle size of 20-150 microns, with the ABS powder or granulate, upon which the mixture is heated to beyond the melting point, in which process the powder resin disperses and subsequently cures to form separate particles in the polymer matrix.

Powder resins that can be added to the thermoplastic polymer mixture according to the invention are generally resins such as, for instance, epoxy resins, polyester resins and/or vinyl resins.

Preference is given to the use of a powder resin having, beyond the melting or processing temperature of the thermoplastic polymer mixture, a viscosity in the melt corresponding with the viscosity of the thermoplastic polymer mixture, so that a good dispersion is obtained. A powder resin based on a thermosetting polyester resin and an epoxy resin, as described in the Dutch patent specification 159129, is highly suitable for this.

The graft copolymer in the thermoplastic polymer mixture according to the invention can be synthesized as known in the art, for instance by means of mass polymerization, emulsion polymerization, suspension polymerization or mass-suspension polymerization.

In the preparation of the graft copolymer and the copolymer preferred vinylaromatic compounds are styrene, α-methyl styrene or derivatives thereof substituted on the aromatic ring. Suitable substituents are alkyl groups such as, for instance, a methyl group and/or a halogen such as, for instance, chlorine or bromine. Mixtures of two or more vinylaromatic compounds can be used also.

In addition to the vinylaromatic compound one or more other monomers can be used in the preparation of the graft copolymer and/or the copolymer. Preferred in the process are the acryl compounds, such as acrylonitrile and methacrylonitrile. It is, however, possible also to use acrylates, such as methyl methacrylate and/or ethyl acrylate.

Other preferred monomers are maleic anhydride, coumarone, indene, vinylacetate and substituted maleimide.

The graft copolymer and any copolymer that may be used may be built up of the same monomers. It is, however, also possible for the graft copolymer to be prepared with styrene and acrylonitrile as monomers, whereas in the copolymer styrene and/or acrylonitrile are replaced wholly or partly by one or more other monomers such as methyl methacrylate, α-methyl styrene or maleic anhydride.

The copolymer is preferably styrene-acrylonitrile (SAN), styrene-maleic anhydride (SMA), α-methyl-styrene-acrylonitrile (AMSAN), or a combination of the above, while, moreover, a third monomer may have been added, such as N-phenyl maleimide, so that a terpolymer is obtained.

The rubber to be used in the preparation of the graft copolymer may in principle be any rubber. Preference is given to the use of polybutadiene homopolymers or butadiene copolymers with a butadiene content of more than 60% (wt). When other dienes, for instance isoprene, or the lower alkyl esters of acrylic acid, are used as comonomers, the butadiene content of the rubber can be reduced to 30% (wt) without any disadvantage for the properties of the polymer composition. The graft polymer according to the invention may in principle be prepared also from largely saturated rubbers, for instance from ethylene-vinylacetate copolymers with a vinylacetate content lower than 50% (wt) or from ethylene-propylene terpolymers, for instance with 1,4 hexadiene, ethylidene norbornene, dicyclopentadiene, as well as acrylate rubber, chlorinated polyethylene or chloroprene rubber. Mixtures of two or more rubbers can be used also.

In the preparation of the graft copolymer and the copolymer the customary auxiliary agents are used, such as chain length regulators, emulsifiers (emulsion polymerization) and compounds supplying free radicals.

For mixing the thermoplastic polymer mixture and the powder resin the mixing devices can be used that are known in the art, such as rollers, batch kneaders and extruders.

The mixture according to the invention preferably contains 5-30 parts by weight of the powder resin. With an addition of less than 5 parts by weight the effect will be too low, whereas an addition of more than 30 parts by weight of powder resin will have an adverse effect on such properties as, for instance, the impact resistance and the like. More particularly 8-15% (wt) is added.

The invention is further elucidated by means of the following examples without possibly being limited thereto.

Example I, II and comparative example A

On a roller were mixed:

a. ABS, with a rubber content of 26% (wt) and an acrylonitrile content of 27% (wt) calculated on the styrene-acrylonitrile phase

b. styrene-acrylonitrile copolymer (SAN), with an acrylonitrile content of 27% (wt)

c. styrene-maleic anhydride (SMA), with a maleic acid content of 28% (wt) and an average Mv of 160,000

d. coating powder Uralac [R] P 3400, DSM, poyester/epoxy resin.

The mixing lasted ten minutes at 180ºC in amounts as mentioned in table 1. Subsequently, the mixture was injection moulded to form small plates. The results are summarized in table 1.

EP 0 306 103 A1

TABLE 1

| Ex. | Uralac[R] pts by wt | ABS pts | SAN pts | SMA pts | gloss 60¤ (o/oo) ASTM 023 | melt flow index (220¤C g/10 min) |
|---|---|---|---|---|---|---|
| A | - | 90 | 10 | - | 55 | 10 |
| I | 10 | 90 | - | - | 24.9 | 6.9 |
| II | 10 | 90 | - | 1 | 21.2 | 2.7 |

## Claims

1. Thermoplastic polymer mixture for the preparation of an object with a low surface gloss based on a graft copolymer of a vinylaromatic compound on a rubber and optionally a copolymer based on a vinylaromatic compound, characterized in that the thermoplastic polymer mixture contains separate particles of a coating powder.

2. Process for preparing a thermoplastic polymer mixture according to claim 1, characterized in that 95-70 parts by weight of the thermoplastic polymer mixture is mixed with 5-30 parts by weight of a curing material that cures so rapidly above the melting or processing temperature that the cured material is present in the matrix of the thermoplastic polymer mixture in the form of separate particles.

3. Process according to claim 2, characterized in that the thermoplastic polymer mixture is mixed with 8-15% (wt) of the curing material.

4. Process according to any one of claims 2-3, characterized in that the curing material is a powder resin based on a polyester and/or an epoxy resin.

5. Moulding compound with a mat surface wholly or partly produced from a polymer mixture according to any one of claims 1-4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 536 080 (SUMITOMO NAUGATUCK) <br> * Claims 1,9,10 * <br> --- | 1-5 | C 08 L 51/04 <br> C 08 L 55/02 |
| A,D | DE-A-2 459 973 (ASAHI KASEI K.K.K.) <br> --- | | |
| A | US-A-3 496 250 (CZERWINSKI) <br> ----- | | |

TECHNICAL FIELDS
SEARCHED (Int. Cl.4)

C 08 L

The present search report has been drawn up for all claims

| Place of search | Date of completion of the search | Examiner |
|---|---|---|
| THE HAGUE | 07-11-1988 | MEULEMANS R.A.M.G.G. |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
 
& : member of the same patent family, corresponding
  document

EPO FORM 1503 03.82 (P0401)